# EUROPEAN PATENT SPECIFICATION

(11) **EP 1 573 103 B1**
(45) Date of publication and mention of the grant of the patent: **12.02.2014**
(21) Application number: 03810060.8
(22) Date of filing: 08.12.2003
(51) Int. Cl.: D04H 1/46, D03D 13/00, B01D 39/08

(54) **HYDROENTANGLING USING A FABRIC HAVING FLAT FILAMENTS**
GEWEBE MIT FLACHEN FILAMENTEN FÜR WASSERVERNADELUNGSVERFAHREN
HYDROENTREMELAGE UTILISANT UN TISSU COMPORTANT DES FILAMENTS PLATS

(30) Priority: 16.12.2002 US 433757 P
(43) Date of publication of application: 14.09.2005
(73) Proprietor: ALBANY INTERNATIONAL CORP., Albany, New York 12204 (US)
(72) Inventor: LEVINE, Mark, J., Hendersonville, TN 37075 (US); WIDEN, Christian, B., Gallatin, TN 37066 (US)
(74) Representative: Forstmeyer, Dietmar
(86) International application number: PCT/US2003/038968
(87) International publication number: WO 2004/061183

(56) References cited:
- US-A- 4 815 499
- US-A- 5 025 839
- US-A- 5 407 737
- US-A- 5 613 527
- US-A- 5 713 398
- US-A- 5 806 155

## Description

### BACKGROUND OF THE INVENTION

### 1. Field of the Invention

The present invention is directed toward the production of nonwoven fabrics, and more particularly to the production of non-woven fabrics through the use of a hydroentangling process.

### 2. Description of the Prior Art

Nonwoven fabrics are used in a wide variety of applications where the engineered qualities of the fabric can be advantageously employed. These types of fabrics differ from traditional woven or knitted fabrics in that the fibers or filaments of the fabric are integrated into a coherent web without traditional textile weaving processes. Entanglement of the fibrous elements of the fabric provides the fabric with the desired integrity, with the selected entanglement process permitting fabrics to be patterned to achieve desired aesthetics.

Nonwoven fabrics are generally made up of fibers locked into place by fiber interaction to provide a strong cohesive structure, oftentimes without the need for binder or filament fusing. The products may have a repeating pattern of entangled fiber regions, of higher area density (weight per unit area) than the average area density of the fabric, and interconnecting fibers which extend between the dense entangled regions and are randomly entangled with each other in the dense entangled regions. Localized entangled regions may be interconnected by fibers extending between adjacent entangled regions to define regions of lower area density than that of the adjacent high density region. A pattern of apertures substantially free from fibers may be defined within or between the dense entangled regions and interconnecting fibers. In some products the dense entangled regions are arranged in a regular pattern and joined by ordered groups of fibers to provide a fabric having an appearance similar to that of a conventional woven fabric, but in which the fibers proceed randomly through the fabric from entangled region to entangled region. The fibers of an ordered group may be either substantially parallel or randomly disposed relative to one another. Embodiments include fabrics having complex fiber structures with entangled fiber regions interconnected by ordered fiber groups located in different thickness zones of the fabric, which are particularly suitable for apparel, including dress goods and suiting materials, and industrial fabrics such as wipes.

As stated, fibers are locked into place in the fabric by fiber interaction. By "locked into place" is meant that individual fibers of the structure not only have no tendency to move from their respective positions in the patterned structure but are actually physically restrained from such movement by interaction with themselves and/or with other fibers of the fabric. Fibers are locked into place in the entangled fiber regions of higher area density than the average area density of the fabric, and such fiber interaction may also occur elsewhere.

By "interaction" is meant that the fibers turn, wind, twist back-and-forth, and pass about one another in all directions of the structure in such an intricate entanglement that they interlock with one another when the fabric is subjected to stress.

Mechanical entanglement processes bind or secure a layer or layers of fibers to themselves or also to a substrate by impaling the batts with a large number of barbed needles in a device called a needle loom or fiber locker. This action pushes fibers from the fiber layer surface into and through the bulk of the batt. While strength properties are improved by this entangling of fibers within the batt, the process can be slow, the needles damage the fibers and are themselves worn out rapidly, and the process is inherently suited only to the entanglement of heavy weight substrates.

In order to avoid these problems hydroentangling (or "spunlacing") processes have been developed which use the energy of small-diameter, highly coherent jets of high pressure water to mimic the entangling action of the older needle loom. The method involves forming a fiber web which is either drylaid or wetlaid, after which the fibers are entangled by means of very fine water jets under high pressure. Several rows of water jets are directed against the fiber web which is supported by a movable wire or fabric. The entangled fiber web is then dried. The fibers that are used in the material can be synthetic or regenerated staple fibers, e. g. polyester, polyamide, polypropylene, rayon or the like, pulp fibers or mixtures of pulp fibers and staple fibers. Spunlace materials can be produced in high quality to a reasonable cost and have a high absorption capacity. They can be used as wiping material for household or industrial use, as disposable materials in medical care and for hygiene purposes etc.

The hydroentangling process can be used to produce a large number of different products by varying the initial material and/or the belt/patterning member used. The initial material may consist of any web, mat, batt or the like of loose fibers disposed in random relationship with one another or in any degree of alignment. The term "fiber" as employed herein is meant to include all types of fibrous material, whether naturally or synthetically produced, comprises fibrids, paper fibers, textile staple fibers and continuous filaments. Improved properties can be obtained by suitable combinations of short and long fibers. Reinforced fabrics are provided by combinations of staple length fibers with substantially continuous fibrous strands, where the term "strands" includes continuous filaments and various forms of conventional textile fibers, which may be straight or crimped, and other desirable products are obtained by using highly crimped and/or elastic fibers in the initial material. Particularly desirable patterned, nonwoven fabrics are prepared by using an initial material comprising fibers having a latent ability to elongate, crimp, shrink, or otherwise change in length, and subsequently , treating the patterned, nonwoven structure to develop the latent properties of the fibers so as to alter the free-length of the fibers. The initial material may contain different types of fibers, e.g., shrinkable and nonshrinkable fibers, to obtain special effects upon activation of the latent properties of one type of fiber.

Initially, the water jet treating process involved the use of preformed dry-laid, fibrous web materials that were supported on an apertured surface so that the streams of water directed at the web material would move or separate the fibers and cause a pattern of varying densities and even apertures therein. In most instances, the resultant web simply evidenced a rearrangement of the fibers in the preformed sheet material, with the rearranged fibers exhibiting very little, if any, actual fiber entanglement. The rearrangement resulted from the use of water at a pressure sufficient to move the fibers sideways, but insufficient to entangle them effectively. These fiber-rearranged and apertured web materials frequently required significant amounts of binder to impart strength sufficient to permit further handling of the sheet materials.

An illustrative hydroentangling system is shown in Figure 3 and is described in U.S. Patent No. 6,163,943 at column 2, line 25 to column 4, line 3 (it is designated as Figure 1 in the patent).

### SUMMARY OF THE INVENTION

The inventors of the present invention have recognized that implementing a hydroentangling process on a fabric which incorporates flattened filaments improves the resulting nonwoven products.

Accordingly, the present invention provides a fabric incorporating flattened filaments for use as a support fabric in producing a nonwoven product by a hydroentangling process, and a hydroentangling method employing such a fabric.

### BRIEF DESCRIPTION OF THE DRAWINGS

The following detailed description, given by way of example and not intended to limit the present invention solely thereto, will best be appreciated in conjunction with the accompanying drawings, wherein like reference numerals denote like elements and parts, in which:
Figure 1 shows a single layer weave pattern incorporating no flattened filaments;
Figure 2 shows a single layer weave pattern incorporating flattened filaments in accordance with the present invention;
Figure 3 is a plan view of a hydroentangling system that is suitable for employing the present invention;
Figures 4A and 4B show two sectional views of an example of a fabric suitable for modification in accordance with the present invention;
Figure 5 is a perspective sectional view of the fabric of Figures 4A and 4B;
Figure 6 is a close-up sectional view of the fabric of Figures 4A and 4B prior to modification in accordance with the present invention;
Figure 7 is a close-up sectional view of the fabric of Figures 4A and 4B after modification in accordance with the present invention;
Figure 8 is a plan view of a section of a hydroentangling machine suitable for implementing a hydroentangling process in accordance with the present invention; and
Figure 9 is a sectional view of an example of a spiral link type fabric/belt that is suitable for modification in accordance with the present invention.

### DETAILED DESCRIPTION OF THE PREFERRED EMBODIMENTS

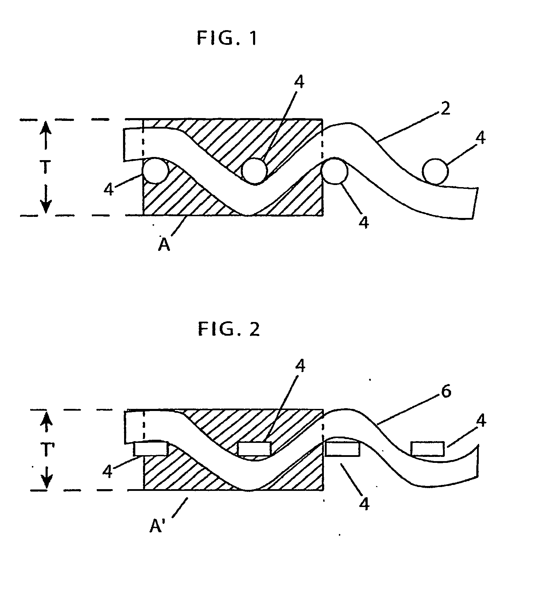

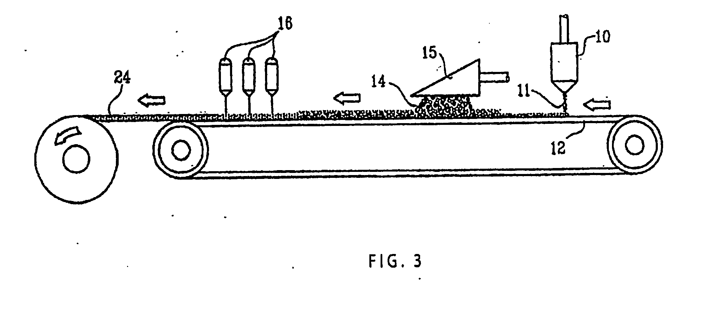

The hydroentangling support fabrics of the present invention may be applied in a hydroentangling system such as that shown in Figure 3, which is described in detail in U.S. Patent No. 6,163,943 as Figure 1, at column 2, line 25 to column 4, line 3. When employed in a system such as that shown in Figure 3, the fabric of the invention would be formed into a continuous belt and the belt would take the place of wire 12.

Hydroentangling support fabrics according to the present invention are preferably woven from monofilaments in both the warp and weft directions. As is well known to those of ordinary skill in the art, the warp monofilaments lie in the cross-machine direction (CD) of the fabric produced by either endless or modified endless weaving, while they lie in the machine direction (MD) if the fabric is flat woven. On the other hand, the weft monofilaments lie in the machine direction (MD) of a fabric produced by endless or modified endless weaving, but in the cross-machine direction (CD) of a flat-woven fabric.

The monofilaments may be extruded, or otherwise produced, from any of the polymeric resin materials commonly used by those of ordinary skill in the art for producing monofilaments for use in papermaker's fabrics, such as, for example, polyamide, polyester, polyetheretherketone, polypropylene, polyolefin and polyethylene terephthalate (PET) resins. Other filament types such as plied monofilament, multifilament, plied multifilament, etc can be used, as commonly known in the art.

It should be noted that, although the terms "filament" and "monofilament" are being used to describe the invention, the invention is not limited to the terms "filament" and "monofilament" as defined in the strict sense. Rather, the terms "filament" and/or "monofilament" are used to denote fibers, threads, yarns, filaments, monofilaments, multifilaments, and the like. Thus, the belt fabric of the invention may be woven from any one of these types of materials or from any combination of these types of materials. Furthermore, the materials used to weave the fabric may be naturally occurring or synthetic. Still further, it is possible to use metal as a material in the formation of the belt. For instance, metallic or sintered metallic yarns may be used, or a yarn having a sintered metal sheath on a mono core can be used. It is also possible to use combinations of various types of metal materials in the formation of the belt.

In any event, the support fabrics of the invention include flattened monofilaments. The flattened monofilaments may be all or some of the CD monofilaments, all or some of the MD monofilaments, or some combination of CD and MD monofilaments. Figures 1 and 2 serve as a comparison of a single layer weave without flattened monofilaments to a single layer weave with flattened monofilaments. As can be seen, Figure 1 shows a round MD monofilament 2 and several round CD monofilaments 4. Figure 2 shows a single round MD monofilament 6 and several flattened CD monofilaments 8. Thus, the embodiment depicted in Figure 2 is an embodiment in which all of the CD monofilaments are flattened. The use of the flattened CD monofilaments gives the weave of Figure 2 a thickness T' that is smaller than the thickness T of the Figure 1 weave. Furthermore, the use of the flattened monofilaments makes the weave of Figure 2 more resistant to water flow in a direction perpendicular or substantially perpendicular to the plane in which the CD monofilaments lie. Shaded areas A and A' are provided merely for purposes of facilitating visual comparison.

The fabrics of the invention may be formed as single, double or triple layer weaves. Flattened monofilaments may be incorporated into any one layer or into any combination of layers, and in any configuration within a given layer. In a preferred embodiment, a triple layer fabric is provided with flattened monofilaments incorporated only in the layer defining the wearside of the fabric (the side opposite the side on which the fibers of the nonwoven are deposited) while rounded monofilaments are exclusively used in the layer defining the forming side of the fabric (the side on which the fibers of the nonwoven are deposited). In such embodiment, the fibers of the nonwoven are supported by the round monofilaments of the forming side while the flat monofilaments promote greater reflective water flow, and therefore greater reflective entanglement energy. By promoting greater reflective entanglement energy, the fabric promotes greater entanglement of the fibers making up the nonwoven, and thereby provides for a stronger finished nonwoven. That is, when water is directed at the fabric in a direction perpendicular, or substantially perpendicular to the plane in which the flattened yarns lie, some water will pass through the forming surface layer and intermediate layer, reflect off the wearside layer, and further entangle the fibers.

In an alternative embodiment, a double layer fabric is provided with flattened monofilaments incorporated only in the layer defining the wearside of the fabric while rounded monofilaments are exclusively used in the other layer. As in the triple layer embodiment, the fibers of the nonwoven are supported by the round monofilaments of the forming side while the flat monofilaments promote greater reflective water flow, and therefore greater reflective entanglement energy.

In still another alternative embodiment, a double or triple layer fabric is provided with flattened monofilaments included only in the forming side layer of the fabric, thereby, providing greater fiber support on the forming side.

In each embodiment, fabric permeabilities are greater than 350 cfm.

In any case, the flattened filaments of the invention can be formed before or after they are woven into a layer, and the flattening can be achieved in several ways. One way to form the flattened filaments is to extrude them in a manner that imparts "flattened" cross-sections to the finished filaments. Two other ways to achieve the desired flattening are calendering and sanding, both of which may be performed before or after the filaments are woven into a layer, and both of which may be used to change the profile/cross-section of the filaments along their entire length or in localized areas along their length.

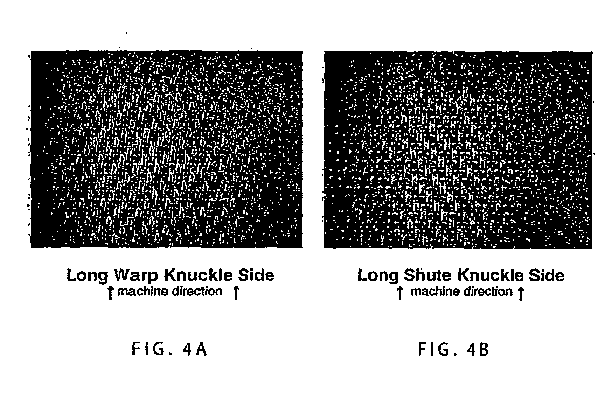

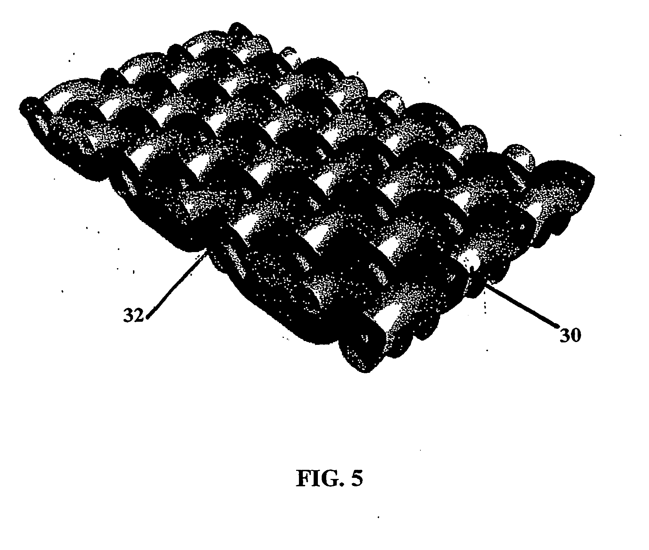

One fabric suitable for modification in accordance with the invention is shown in Figures 4A and 4B and is referred to as the FormTech 103A fabric or the Flex 310K fabric. Figure 4A is a sectional view of the long warp knuckle side of the unmodified fabric. Figure 4B is a sectional view of the long shute knuckle side of the unmodified fabric. Figure 5 is a perspective view of the fabric depicted in Figures 4A and 4B. The long shute knuckle side of the fabric is prominent in Figure 5 and is denoted by reference numeral 30, while the long warp knuckle side is denoted by reference numeral 32.

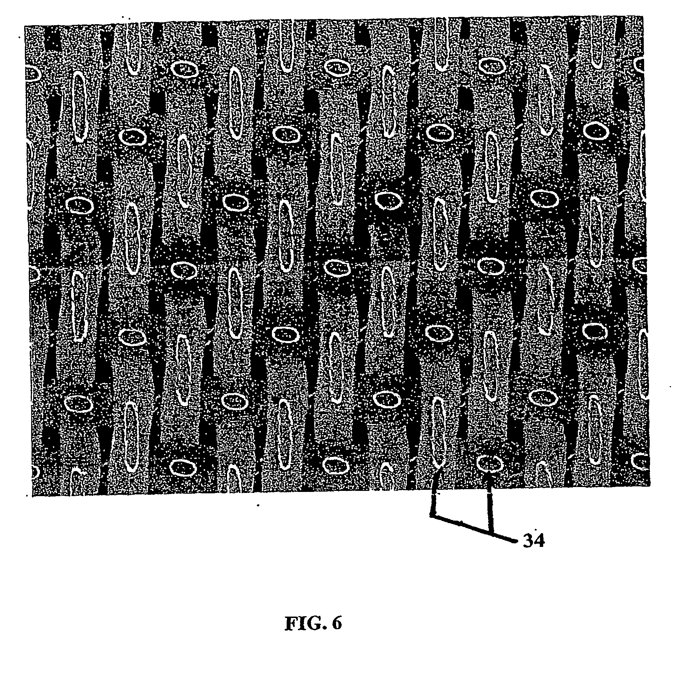

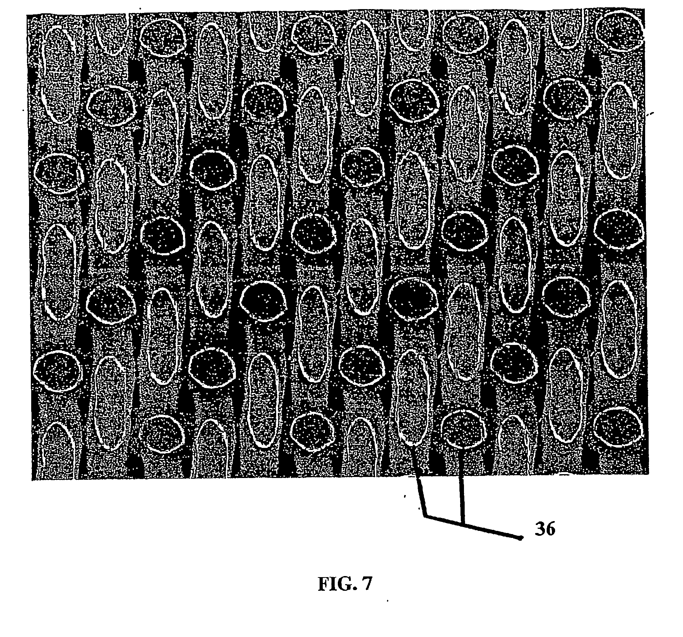

Figure 6 is a close-up of the long warp knuckle side of the fabric depicted in Figures 4A and 4B. The close-up of Figure 6 shows an unmodified fabric wherein the "effective flat area" of the fabric surface is denoted by a multiple of circular and oval markings 34. Figure 7 is a close-up of the long warp knuckle side of the fabric of Figures 4A and 4B after the fabric has been calendered in accordance with the invention. In the fabric of Figure 7, calendering has been applied to only the long warp knuckle side and circular and oval areas 36 denote the effective flat area of the long warp knuckle side after calendering. As can be seen through a comparison of Figures 6 and 7, calendering the fabric substantially increases the effective flat area on the long warp knuckle side. A similar increase in effective flat area is realized on the long shute knuckle side when the calendering is applied to only the long shute knuckle side. In yet another embodiment, both the long warp knuckle side and the long shute knuckle side are calendered and the effective flat area of both sides is increased. It should be noted the calendering discussed in connection with Figure 7 is calendering of a woven fabric, and accordingly, such calendering results in the flattening of at least portions of all filaments/yarns in the fabric. It should be further noted that the calendering of Figure 7 results in about a 15% reduction in the caliper of the fabric as compared to its uncalendered state and about a 20% reduction in airflow through the fabric as compared to its uncalendered state.

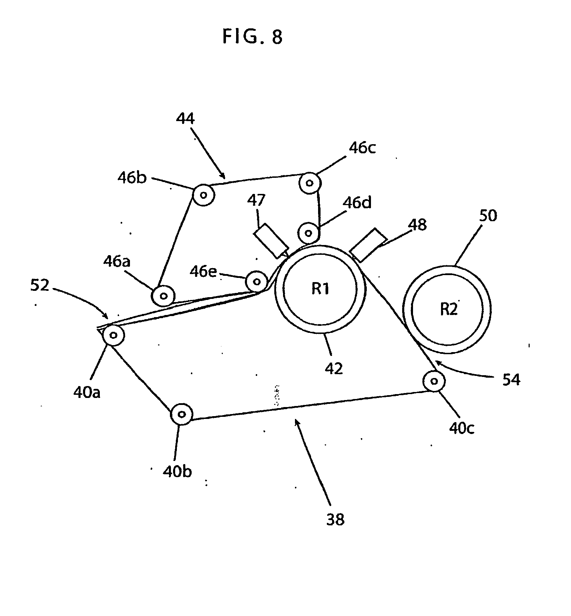

Figure 8 shows a section of a hydroentangling machine suitable for implementing a hydroentangling process using the calendered fabric of Figure 7. As can be seen from Figure 8, the section of the hydroentangling machine includes a hydroentangling fabric 38 such as the fabric depicted in Figure 7, a multiple of hydroentangling fabric guide rolls 40a-c, a first roll 42, a second roll 50, a compacting fabric 44, a multiple of compacting fabric guide rolls 46a-e, a first water jet 47, and a second water jet 48. The fiber web and resulting non-woven fabric produced by the machine are denoted by reference numeral 52. In operation, the fiber web is deposited on the hydroentangling fabric 38,
compacted between the hydroentangling fabric 38 and the compacting fabric 44, acted on by the first water jet 47, and then acted on by the second water jet 48 which is the primary entangling water jet. The entangled web is released from the hydroentangling fabric 38 at a release point 54, at which point the web is taken up by the second roll 50. With respect to Figure 8 in general, it is noted that although the figure is discussed as showing a "section" of a hydroentangling machine, it is possible that the elements of the figure make up the entirety of a hydroentangling machine.

The advantages of hydroentangling according to the invention are confirmed using modified versions of the fabric of Figures 4A and 4B on a machine incorporating the structure of Figure 8. In particular, the invention reduces entangling of fibers to the fabric surface and improves reflection (or "flashback") of water jets. Furthermore, the invention improves release of the fiber web from the hydroentangling fabric after entangling and improves MD/CD tensile ratios. More specifically, tests using a machine in accordance with Figure 8 have shown that release of the fiber web from the hydroentangling fabric improves such that the draw is reduced from about 8% to 0%, and that the MD/CD ratio improvement is about 10% to 40%.
Moreover, when the invention is implemented by calendering a fabric like that depicted in Figures 4A and 4B, the advantages of the invention are realized regardless of whether both sides of the fabric are calendered or only one side of the fabric is calendered, and in the case of single-side calendering, regardless of which side is calendered. Additionally, such calendered fabrics improve the runnability of the hydroentangling machine, increase line speeds, and reduce draft and MD orientation.

While the present invention has been particularly shown and described in conjunction with preferred embodiments thereof, it will be readily appreciated by those of ordinary skill in the art that various changes may be made without departing from the spirit and scope of the invention. For example, the invention may be implemented in hydroentangling fabrics/belts of the spiral link type. Spiral link type fabrics/belts are discussed in general in U.S. Patent No. 4,345,730, which is hereby incorporated by reference.

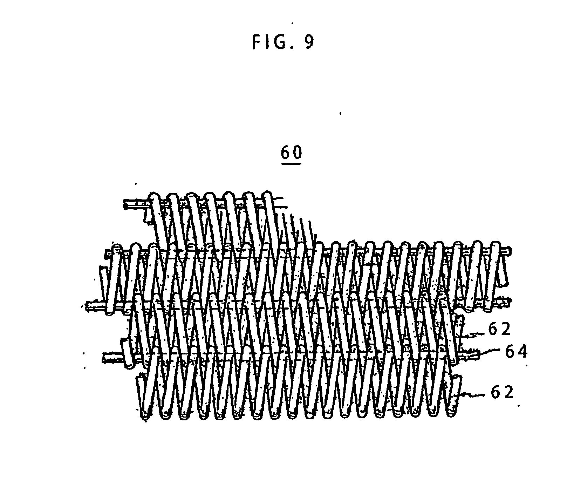

Figure 9 shows a sectional view of an example of a spiral link fabric 60 that is suitable for modification in accordance with the present invention. As can be seen from Figure 9, the spiral link fabric is formed of a plurality of spiral monofilaments 62 and a plurality of link monofilaments 64. As in the case of the MD/CD yarn embodiments, the spiral filaments and link filaments may be extruded, or otherwise produced, from any of the polymeric resin materials commonly used by those of ordinary skill in the art for producing monofilaments for use in papermaker's fabrics. Further, the terms "filament" and "monofilament" are used in the same broad sense that they are used to describe the MD/CD yarn embodiments.
After the Figure 9 fabric is modified in accordance with the invention, the fabric includes flattened monofilaments. The flattened monofilaments may be all or some of the spiral monofilaments, all or some of the link monofilaments, or some combination of spiral and link monofilaments. In any case, the flattened filaments of the invention can be formed before or after they are incorporated into the spiral link fabric, and the flattening can be achieved through any one of the several techniques discussed in connection with the MD/CD yarn embodiments. That is, the flattened filaments may be formed by extruding them in a manner that imparts "flattened" cross-sections to the finished filaments, by calendaring, or by sanding. As in the case of the MD/CD yarn embodiments, the calendaring and sanding operations may be performed before or after the filaments are incorporated into the fabric, and may be used to change the profile/cross-section of the filaments along their entire length or in localized areas along their length.
The flattened monofilaments of Figure 9 promote greater reflective water flow, thereby promoting greater entanglement of the fibers making up the nonwoven and thus providing for a stronger finished nonwoven.

## Claims

1. A hydroentangling apparatus for the production of a hydroentangled nonwoven product, the improvement comprising: a hydroentangling support fabric comprising flattened filaments, wherein said support fabric is in a continuous loop or made endless.

2. The apparatus of Claim 1, wherein said support fabric includes machine direction (MD) filaments and Cross-machine direction (CD) filaments and said flattened filaments include only a Portion of said MD filaments.

3. The apparatus of Claim 1, wherein said support fabric includes MD filaments and CD filaments and said flattened filaments include all of said MD filaments.

4. The apparatus of Claim 1, wherein said support fabric includes MD filaments and CD filaments and said flattened filaments include only a portion of said CD filaments.

5. The apparatus of Claim 1, wherein said support fabric includes MD filaments and CD filaments and said flattened filaments include all of said CD filaments.

6. The apparatus of Claim 1, wherein said support fabric includes MD filaments and CD filaments and said flattened filaments include a combination of said MD filaments and said CD filaments.

7. The apparatus of Claim 1, wherein said support fabric is a multilayer weave fabric and said flattened filaments are incorporated into only one layer.

8. The apparatus of Claim 7, wherein said one layer of said support fabric is the wear side layer.

9. The apparatus of Claim 7, wherein said one layer of said support fabric is the forming side layer.

10. The apparatus of Claim 1, wherein said support fabric is a triple layer fabric and said flattened filaments are incorporated into only one layer.

11. The apparatus of claim 10, wherein said one layer of said support fabric is the wear side layer.

12. The apparatus of Claim 10, wherein said one layer of said support fabric is the forming side layer.

13. The apparatus of Claim 1, wherein the permeability of said support fabric is greater than 350 cfm.

14. An improved hydroentangling support fabric in a hydroentangling apparatus for production of a hydroentangled nonwoven product, the improvement comprising: said hydroentangling support fabric comprising flattened filaments, wherein said support fabric is in a continuous loop or made endless.

15. The support fabric in the hydroentangling apparatus of claim 14, wherein said flattened filaments are formed through extrusion prior to weaving of said support fabric.

16. The support fabric in the hydroentangling apparatus of claim 14, wherein said flattened filaments are formed by calendering non-flattened filaments prior to weaving of said support fabric.

17. The support fabric in the hydroentangling apparatus of claim 14, wherein said flattened filaments are formed by calendering a source fabric.

18. The support fabric in the hydroentangling apparatus of claim 17, wherein said calendering is applied to only one side of said source fabric.

19. The support fabric in the hydroentangling apparatus of claim 17, wherein said calendering is applied to both sides of said source fabric.

20. The support fabric in the hydroentangling apparatus of claim 14, wherein said flattened filaments are formed by sanding a source fabric.

21. The support fabric in the hydroentangling apparatus of claim 14, wherein said flattened filaments are incorporated into said support fabric during production of said support fabric.

## Patentansprüche

1. Wasserstrahlverfestigungsvorrichtung zur Herstellung eines wasserstrahlverfestigten Vliesprodukts, wobei die Verbesserung umfasst: ein Wasserstrahlverfestigungsträgergewebe, umfassend abgeflachte Filamente, wobei das Trägergewebe in einer Endlosschleife angeordnet ist oder endlos gemacht ist.

2. Die Vorrichtung nach Anspruch 1, wobei das Trägergewebe Filamente in Maschinenrichtung (MD) und Filamente quer zur Maschinenrichtung (CD) beinhaltet, und die abgeflachten Filamente lediglich einen Teil der MD- Filamente enthalten.

3. Die Vorrichtung nach Anspruch 1, wobei das Trägergewebe MD-Filamente und CD- Filamente beinhaltet, und die abgeflachten Filamente alle von den MD- Filamenten enthalten.

4. Die Vorrichtung nach Anspruch 1, wobei das Trägergewebe MD-Filamente und CD- Filamente beinhaltet, und die abgeflachten Filamente lediglich einen Teil der CD- Filamente enthalten.

5. Die Vorrichtung nach Anspruch 1, wobei das Trägergewebe MD-Filamente und CD- Filamente beinhaltet, und die abgeflachten Filamente alle von den CD- Filamenten enthalten.

6. Die Vorrichtung nach Anspruch 1, wobei das Trägergewebe MD-Filamente und CD- Filamente beinhaltet, und die abgeflachten Filamente eine Kombination von den MD- Filamenten und den CD-Filamenten enthalten.

7. Die Vorrichtung nach Anspruch 1, wobei das Trägergewebe ein mehrlagiges Fasergeflecht ist und die abgeflachten Filamente nur in eine Lage eingearbeitet sind.

8. Die Vorrichtung nach Anspruch 7, wobei diese eine Lage des Trägergewebes die Verschleißseitenschicht ist.

9. Die Vorrichtung nach Anspruch 7, wobei diese eine Lage des Trägergewebes die Formgebungsseitenschicht ist.

10. Die Vorrichtung nach Anspruch 1, wobei das Trägergewebe ein dreilagiges Gewebe ist und die abgeflachten Filamente nur in eine Lage eingearbeitet sind.

11. Die Vorrichtung nach Anspruch 10, wobei diese eine Lage des Trägergewebes die Verschleißseitenschicht ist.

12. Die Vorrichtung nach Anspruch 10, wobei diese eine Lage des Trägergewebes die Formgebungsseitenschicht ist.

13. Die Vorrichtung nach Anspruch 1, wobei die Permeabilität des Trägergewebes größer als 350 cfm ist.

14. Verbessertes Wasserstrahlverfestigungsträgergewebe in einer Wasserstrahlverfestigungsvorrichtung zur Herstellung eines wasserstrahlverfestigten Vliesprodukts, wobei die Verbesserung umfasst: ein Wasserstrahlverfestigungsträgergewebe, umfassend abgeflachte Filamente, wobei das Trägergewebe in einer Endlosschleife angeordnet ist oder endlos gemacht ist.

15. Das Trägergewebe in der Wasserstrahlverfestigungsvorrichtung nach Anspruch 14, wobei die abgeflachten Filamente durch Extrusion vor dem Weben des Trägergewebes gebildet werden.

16. Das Trägergewebe in der Wasserstrahlverfestigungsvorrichtung nach Anspruch 14, wobei die abgeflachten Filamente durch Kalandrieren von nichtabgeflachten Filamenten vor dem Weben des Trägergewebes gebildet werden.

17. Das Trägergewebe in der Wasserstrahlverfestigungsvorrichtung nach Anspruch 14, wobei die abgeflachten Filamente durch Kalandrieren eines Ausgangsgewebes (source fabric) gebildet werden.

18. Das Trägergewebe in der Wasserstrahlverfestigungsvorrichtung nach Anspruch 17, wobei das Kalandrieren nur bei einer Seite des Ausgangsgewebes angewandt wird.

19. Das Trägergewebe in der Wasserstrahlverfestigungsvorrichtung nach Anspruch 17, wobei das Kalandrieren bei beiden Seiten des Ausgangsgewebes angewandt wird.

20. Das Trägergewebe in der Wasserstrahlverfestigungsvorrichtung nach Anspruch 14, wobei die abgeflachten Filamente durch Schleifen eines Ausgangsgewebes gebildet werden.

21. Das Trägergewebe in der Wasserstrahlverfestigungsvorrichtung nach Anspruch 14, wobei die abgeflachten Filamente während der Herstellung des Trägergewebes in das Trägergewebe eingearbeitet werden.

## Revendications

1. Appareil d'hydroenchevêtrement pour la production d'un produit non-tissé hydroenchevêtré, l'amélioration comprenant:
un tissu de support d'hydroenchevêtrement comprenant des filaments aplatis, dans lequel ledit tissu de support est dans une boucle continue ou rendu sans fin.

2. Appareil selon la revendication 1, dans lequel ledit tissu de support comprend des filaments à sens machine (« machine direction » ou MD) et des filaments à sens machine transversal (« cross-machine direction » ou CD) et lesdits filaments aplatis comprennent seulement une partie desdits filaments MD.

3. Appareil selon la revendication 1, dans lequel ledit tissu de support comprend des filaments MD et des filaments CD et lesdits filaments aplatis comprennent tous lesdits filaments MD.

4. Appareil selon la revendication 1, dans lequel ledit tissu de support comprend des filaments MD et des filaments CD et lesdits filaments aplatis comprennent seulement une partie desdits filaments CD.

5. Appareil selon la revendication 1, dans lequel ledit tissu de support comprend des filaments MD et des filaments CD et lesdits filaments aplatis comprennent tous lesdits filaments CD.

6. Appareil selon la revendication 1, dans lequel ledit tissu de support comprend des filaments MD et des filaments CD et lesdits filaments aplatis comprennent une combinaison desdits filaments MD et desdits filaments CD.

7. Appareil selon la revendication 1, dans lequel ledit tissu de support est un tissu d'armure multicouche et lesdits filaments aplatis sont incorporés dans seulement une couche.

8. Appareil selon la revendication 7, dans lequel ladite une couche dudit tissu de support est la couche côté usure.

9. Appareil selon la revendication 7, dans lequel ladite une couche dudit tissu de support est la couche côté formation.

10. Appareil selon la revendication 1, dans lequel ledit tissu de support est un tissu à triple couche et lesdits filaments aplatis sont incorporés dans seulement une couche.

11. Appareil selon la revendication 10, dans lequel ladite une couche dudit tissu de support est la couche côté usure.

12. Appareil selon la revendication 10, dans lequel ladite une couche dudit tissu de support est la couche côté formation.

13. Appareil selon la revendication 1, dans lequel la perméabilité dudit tissu de support est supérieure à 350 cfm.

14. Tissu de support d'hydroenchevêtrement amélioré dans un appareil d'hydroenchevêtrement pour la production d'un produit non tissé hydroenchevêtré, l'amélioration comprenant :
ledit tissu de support d'hydroenchevêtrement comprenant des filaments aplatis, dans lequel ledit tissu de support est dans une boucle continue ou rendu sans fin.

15. Tissu de support dans l'appareil d'hydroenchevêtrement selon la revendication 14, dans lequel lesdits filaments aplatis sont formés par extrusion avant le tissage dudit tissu de support.

16. Tissu de support dans l'appareil d'hydroenchevêtrement selon la revendication 14, dans lequel lesdits filaments aplatis sont formés en calandrant des filaments non aplatis avant le tissage dudit tissu de support.

17. Tissu de support dans l'appareil d'hydroenchevêtrement selon la revendication 14, dans lequel lesdits filaments aplatis sont formés en calandrant un tissu source.

18. Tissu de support dans l'appareil d'hydroenchevêtrement selon la revendication 17, dans lequel ledit calandrage est appliqué seulement sur un côté dudit tissu source.

19. Tissu de support dans l'appareil d'hydroenchevêtrement selon la revendication 17, dans lequel ledit calandrage est appliqué sur les deux côtés dudit tissu source.

20. Tissu de support dans l'appareil d'hydroenchevêtrement selon la revendication 14, dans lequel lesdits filaments aplatis sont formés en ponçant un tissu source.

21. Tissu de support dans l'appareil d'hydroenchevêtrement selon la revendication 14, dans lequel lesdits filaments aplatis sont incorporés dans ledit tissu de support durant la production dudit tissu de support.
